# EUROPEAN PATENT APPLICATION

(11) **EP 3 168 098 A1**
(43) Date of publication of application: **17.05.2017**
(21) Application number: 15818227.9
(22) Date of filing: 10.07.2015
(51) Int. Cl.: B60T 8/00, B60W 10/04, B60W 10/18

(54) **VEHICLE CONTROL DEVICE AND VEHICLE CONTROL METHOD**

(30) Priority: 11.07.2014 JP 2014143413
(71) Applicant: Hitachi Automotive Systems, Ltd., Hitachinaka-shi, Ibaraki 312-8503 (JP)
(72) Inventor: KANEKO, Satoshi, Atsugi-shi Kanagawa 243-8510 (JP); SUZUKI, Keisuke, Atsugi-shi Kanagawa 243-8510 (JP)
(74) Representative: Hoefer & Partner Patentanwälte mbB
(86) International application number: PCT/JP2015/069913
(87) International publication number: WO 2016/006687

(57) **Abstract**

An aspect of the present invention includes, when controlling a driving force of an electric motor configured to provide a driving force to a wheel and a braking force of a hydraulic braking device configured to provide a braking force to the wheel, reducing the driving force according to a driver's brake operation state and also adjusting the braking force according to this driving force if a driver's brake operation is detected, and generating the braking force according to the brake operation state if a sudden braking state is detected.

## Description

### TECHNICAL FIELD

The present invention relates to a vehicle control apparatus and a vehicle control method.

### BACKGROUND ART

As a conventional vehicle control apparatus, there is disclosed a technique that reduces a creep force as a brake operation amount is increased, and reduces a braking force as an amount of the reduction in the creep force is increased.

### CITATION LIST

### PATENT LITERATURE

PTL 1: Japanese Patent Application Public Disclosure No. 2000-69604

### SUMMARY OF INVENTION

### TECHNICAL PROBLEM

However, the above-described conventional technique results in that the braking force is reduced as the brake operation amount is increased, thereby entailing such a problem that, when the vehicle is braked suddenly to, for example, avoid an obstacle, only a limited braking force can be applied, leading to an extension of a braking distance.

An object of the present invention is to provide a vehicle control apparatus and a vehicle control method that can prevent or reduce the extension of the braking distance when the vehicle is braked suddenly.

### SOLUTION TO PROBLEM

in an aspect of the present invention, when controlling a driving force of an electric motor configured to provide a driving force to a wheel and a braking force of a hydraulic braking device configured to provide a braking force to the wheel, the driving force is reduced according to a driver's brake operation state and the braking force is adjusted according to this driving force if a driver's brake operation is detected, and the braking force is generated according to the brake operation state if detecting a sudden braking state.

### BRIEF DESCRIPTION OF DRAWINGS

Fig. 1 is a system diagram illustrating a configuration of an electric vehicle according to a first embodiment.
Fig. 2 is a control block diagram regarding creep control by a vehicle controller 4.
Fig. 3 illustrates a map for setting a creep torque instruction value according to the number of rotations of a motor.
Fig. 4 is a control block diagram of a limit value calculation unit 23.
Fig. 5 illustrates a map for setting a creep torque limit value according to a brake operation amount.
Fig. 6 is a timing chart illustrating an operation of the creep control according to the first embodiment when the vehicle is braked normally (when the vehicle is not braked suddenly).
Fig. 7 is a timing chart illustrating an operation of the creep control according to the first embodiment when the vehicle is braked suddenly.

### DESCRIPTION OF EMBODIMENTS

### [First Embodiment]

In the following description, how a control apparatus of an electric vehicle according to the present invention can be implemented will be described with reference to exemplary embodiments illustrated in the drawings.

First, a configuration will be described.

### [System Configuration of Electric Vehicle]

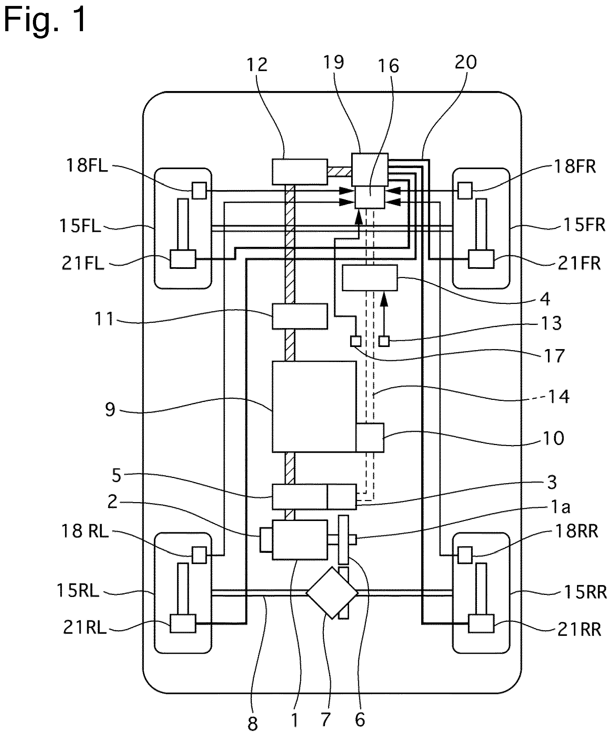

Fig. 1 illustrates a system configuration of an electric vehicle according to a first embodiment.

The electric vehicle according to the first embodiment includes an electric motor (hereinafter referred to as a motor) 1 which generates a positive torque and a negative torque (a driving torque and a braking torque). A resolver is connected to the motor 1 as a sensor 2 for the number of rotations of the motor. A motor controller (a motor control unit) 3 outputs an inverter driving instruction to an inverter 5 by referring to the number of rotations of the motor that is output from the sensor 2 for the number of rotations of the motor, based on a motor torque instruction value from a vehicle controller 4. The inverter 5 supplies a current according to the inverter driving instruction to the motor 1, thereby controlling a motor torque.

An output shaft 1a of the motor 1 is connected to a speed reducer 6, and transmits the torque to an axle 8 via a differential gear 7. Power for driving the motor 1 is supplied from a high-voltage battery 9. The high-voltage battery 9 is monitored by a battery controller 10 in terms of a charged state thereof and how much heat is generated. A DC-DC converter 11 is connected to the high-voltage battery 9, and the voltage is lowered by the DC-DC converter 11 to charge a low-voltage battery 12.

The vehicle controller 4 calculates the motor torque instruction value based on a stroke of an accelerator pedal (an accelerator operation amount) from an accelerator stroke sensor 13, respective wheel speeds of individual wheels 15FL, 15FR, 15RL, and 15RR input via an in-vehicle communication line 14, the charged state of the high-voltage battery 9, and the like. Further, the vehicle controller 4 calculates a regenerative torque instruction value for regenerative cooperative control based on the respective wheel speeds input via the in-vehicle communication line 14, the stroke of the brake pedal (a brake operation amount), the charged state of the high-voltage battery 9, and the like. The regenerative cooperative control is brake control that uses a frictional braking force generated by each of brake calipers 21FL, 21FR, 21RL, and 21RR to compensate for insufficiency of a regenerative braking force generated by a regenerative operation of the motor 1 with respect to a braking force required to generate a deceleration according to a driver's brake operation, thereby acquiring the deceleration requested by the driver with use of both the braking forces as a whole of the vehicle. The regenerative torque instruction value is output to the in-vehicle communication line 14.

A brake controller (a hydraulic braking control unit) 16 calculates the braking force according to the brake operation amount (a brake operation state) from a brake stroke sensor (a brake operation state detection unit) 17, i.e., a braking force instruction value for acquiring the braking force requested by the driver, and outputs a hydraulic control unit driving instruction to a hydraulic control unit 19. According to the hydraulic control unit driving instruction, the hydraulic control unit 19 activates a pump motor and each valve in the hydraulic control unit 19 to feed brake fluid to each of the brake calipers 21FL, 21FR, 21RL, and 21RR provided at the individual wheels 15FL, 15FR, 15RL, and 15RR, respectively, via a hydraulic pipe 20, thereby generating the frictional braking force. A hydraulic braking device which provides the braking force to the wheels 15FL, 15FR, 15RL, and 15RR is formed by the hydraulic control unit 19, the hydraulic pipe 20, and the brake calipers 21FL, 21FR, 21RL, and 21RR.

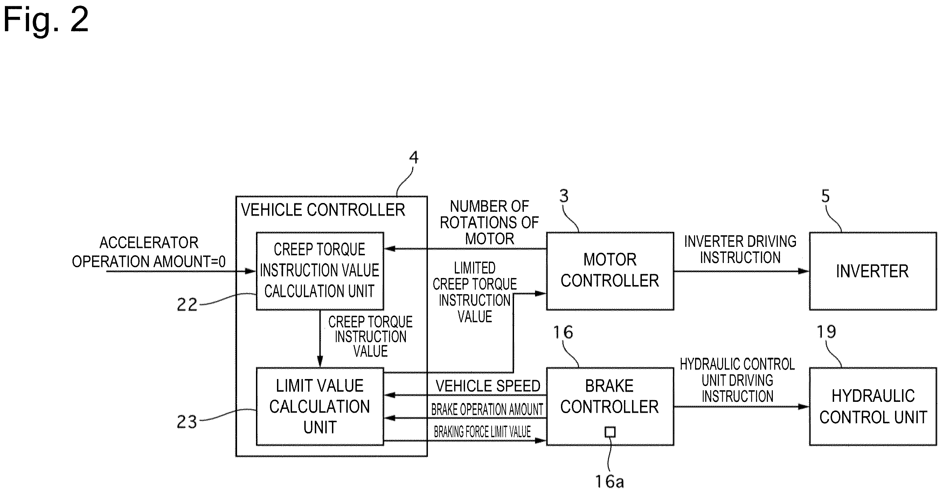

During the regenerative cooperative control, the brake controller 16 sets, as the braking force instruction value, a value acquired by subtracting a value converted from the regenerative torque instruction value input via the in-vehicle communication line 14 into the braking force from the braking force instruction value according to the brake operation amount, and drives the hydraulic control unit 19 according thereto. Further, the brake controller 16 calculates braking force instruction values for control for preventing a driving slip (TCS control), control for preventing a braking slip (ABS control), automatic brake control, and the like based on each of the wheel speeds from respective wheel speed sensors 18FL, 18FR, 18RL, and 18RR, the number of rotations of the motor input via the in-vehicle communication line 14, the motor torque, information from another in-vehicle sensor (a yaw rate sensor, a G sensor, and/or the like), and the like in addition to the brake operation amount. Then, the brake controller 16 outputs the hydraulic control unit driving instruction to the hydraulic control unit 19. The brake controller 16 includes a vehicle speed calculation unit 16a (refer to Fig. 2) which calculates a vehicle speed. The vehicle speed calculation unit 16a calculates the vehicle speed from each of the wheel speeds. The brake controller 16 uses the calculated vehicle speed for each of the above-described kinds of control, and also outputs this vehicle speed to the in-vehicle communication line 14. The vehicle speed is, for example, calculated from an average value of the respective wheel speeds of the front wheels 15FL and 15FR.

### [Creep Control]

If the accelerator operation amount is zero and the number of rotations of the motor is equal to or smaller than a predetermined second number of rotations Nₜₕ₂ (for example, the number of rotations of the motor when the vehicle speed is 10 km/h), the vehicle controller 4 outputs a creep torque instruction value for imitating a creep force of an automatic transmission car to the motor controller 3, thereby causing the motor 1 to generate a creep torque. If the driver operates the brake pedal at this time, the vehicle controller 4 reduces the creep force according to the brake operation amount, and at the same time, reduces the frictional braking force as an amount of the reduction in the creep force is increased.

Fig. 2 is a control block diagram regarding the creep control performed by the vehicle controller 4.

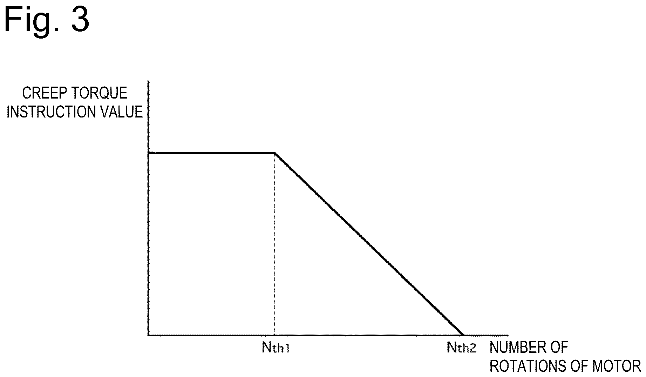

A creep torque instruction value calculation unit (a driver request driving force calculation unit) 22 calculates the creep torque instruction value according to the number of rotations of the motor, when the accelerator operation amount is zero. Fig. 3 is a map for setting the creep torque instruction value according to the number of rotations of the motor. The creep instruction value is set so as to be maximized in a section where the number of rotations of the motor is from zero to a predetermined first number of rotations Nₜₕ₁ (< Nₜₕ₂), be reduced as the number of rotations of the motor is increased in a section where the number of rotations of the motor is from the first number of rotations Nₜₕ₁ to the second number of rotations Nₜₕ₂, and become zero when the number of rotations of the motor is the second number of rotations Nₜₕ₂.

A limit value calculation unit (a driver request driving force limit unit) 23 calculates a limited creep torque instruction value acquired by limiting the creep torque instruction value according to the brake operation amount, and a braking force limit value for limiting the braking force instruction value according to the brake operation amount that is calculated by the brake controller 16. The motor controller 3 outputs the inverter driving instruction based on the limited creep torque instruction value to the inverter 5 during the creep control. The brake controller 16 outputs the hydraulic control unit driving instruction based on a limited braking force instruction value acquired by subtracting the braking force limit value from the braking force instruction value to the hydraulic control unit 19 during the creep control. If the braking force instruction value is equal to or smaller than the limited braking force instruction value, the brake controller 16 outputs the hydraulic control unit driving instruction based on the braking force instruction value to the hydraulic control unit 19.

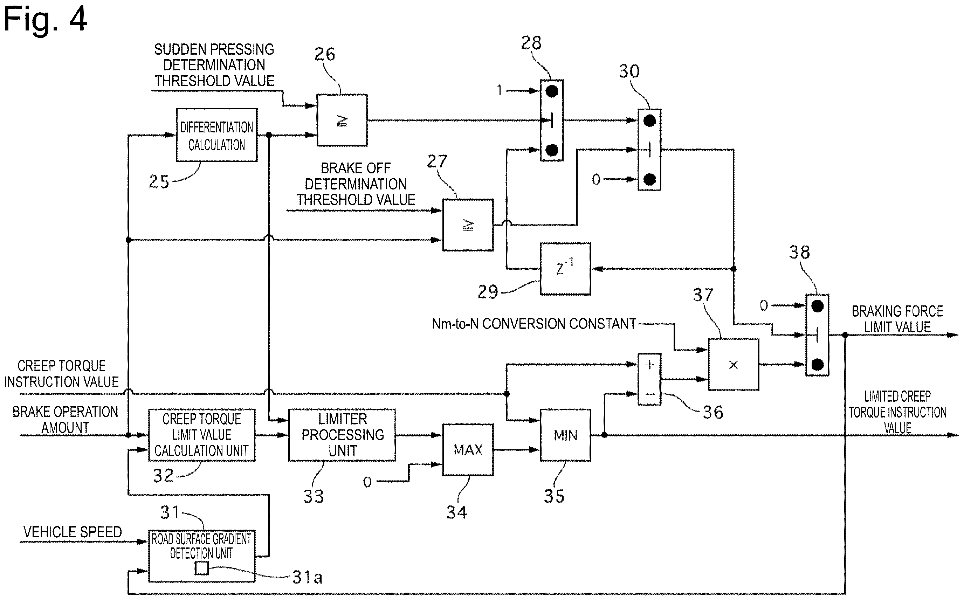

Fig. 4 is a control block diagram of the limit value calculation unit 23.

A differentiation calculation unit 25 calculates a brake operation speed by calculating a first-order differential of the brake operation amount.

A sudden pressing determination unit 26 compares the brake operation speed and a predetermined sudden pressing determination threshold value to each other. Then, the sudden pressing determination unit 26 turns on a sudden pressing determination flag indicating that the vehicle is in a state where the brake pedal is pressed suddenly (a sudden braking state) if the brake operation speed is equal to or larger than the sudden pressing determination threshold value, and turns off the sudden pressing determination flag if the brake operation speed is smaller than the sudden pressing determination threshold value.

A brake ON determination unit 27 compares the brake operation amount and a predetermined brake OFF determination threshold value to each other. Then, the brake ON determination unit 27 turns on a brake ON determination flag indicating that the brake pedal is operated if the brake operation amount is equal to or larger than the brake OFF determination threshold value, and turns off the brake ON determination flag if the brake operation amount is smaller than the brake OFF determination threshold value.

An output switching unit 28 outputs this sudden pressing determination flag if the sudden pressing determination flag is turned on, and outputs the sudden pressing determination flag that has been set in a calculation cycle immediately before the present calculation cycle if the sudden pressing determination flag is turned off.

A previous cycle value calculation unit 29 outputs the sudden pressing determination flag that has been set in the calculation cycle immediately before the present calculation cycle.

A sudden pressing determination flag holding unit 30 outputs a state of the sudden pressing determination flag from the output switching unit 28 if the brake ON determination flag is turned on, and turns off the sudden pressing determination flag if the brake ON determination flag is turned off.

When the sudden pressing determination flag is turned on once by the sudden pressing determination unit 26 due to operations of the output switching unit 28, the previous cycle value calculation unit 29, and the sudden pressing determination flag holding unit 30, the sudden pressing determination flag is kept in the turned-on state until the brake pedal stops being operated.

A road surface gradient detection unit 31 detects a gradient of a road surface. The road surface gradient detection unit 31 includes a vehicle speed prediction unit 31a. The vehicle speed prediction unit 31a estimates the braking force generated at the vehicle from the braking force limit value, and predicts the vehicle speed when the vehicle is running on a flat road (a predicted vehicle speed) based on the braking force generated at the vehicle. The road surface gradient detection unit 31 acquires the gradient of the road surface from a difference between the predicted vehicle speed predicted by the vehicle speed prediction unit 31a and the vehicle speed calculated by the brake controller 16 (the calculated vehicle speed). The wheel speed is calculated from, for example, an average value of the respective wheel speeds of the left and right front wheels 15FL and 15FR. When the vehicle is running on an ascending gradient, the calculated vehicle speed falls below the predicted vehicle speed. When the vehicle is running on a descending gradient, the calculated vehicle speed exceeds the predicted vehicle speed. Further, as the gradient of the road surface is increased, a larger difference is generated between the predicted vehicle speed and the calculated vehicle speed. Therefore, the gradient of the road surface can be estimated by comparing the predicted vehicle speed and the calculated vehicle speed to each other.

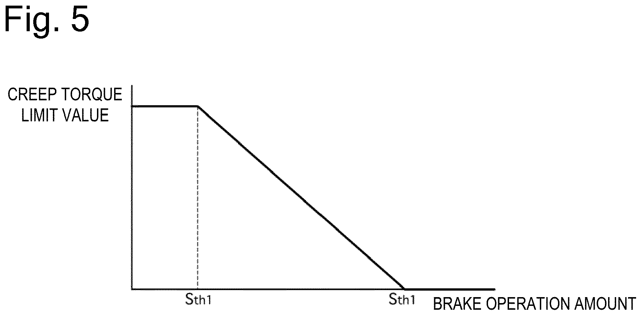

A creep torque limit value calculation unit 32 calculates the creep torque limit value for limiting a maximum value of the creep torque instruction value based on the brake operation amount and the gradient of the road surface. Fig. 5 illustrates a map for setting the creep torque limit value according to the brake operation amount. The creep torque limit value is set so as to be maximized in a section where the brake operation amount is zero to a first operation amount Sₜₕ₁, be reduced as the brake operation amount is increased in a section where the brake operation amount is the first operation amount Sₜₕ₁ to a second operation amount Sₜₕ₂, and become zero in a section where the brake operation amount is equal to or larger than the second operation amount Sₜₕ₂. The creep torque limit value calculated from the map illustrated in Fig. 5 is corrected according to the gradient of the road surface. When the vehicle is running on the ascending gradient, the creep torque limit value is increased as the gradient of the road surface is increased. This correction causes the creep force of the vehicle on the ascending gradient to be set to a second creep force larger than the creep force according to the brake operation amount (a first creep force). On the other hand, when the vehicle is running on the descending gradient, the creep torque limit value is reduced as the gradient of the road surface is increased.

A limiter processing unit 33 limits a maximum value of a change rate of the creep torque limit value calculated by the creep torque limit value calculation unit 32 with use of a rate limiter value according to the brake operation speed.
The rate limiter value is set to a large value as the brake operation speed is increased, is set into synchronization with (set so as to match) the brake operation speed if the brake operation speed is equal to or smaller than a predetermined speed Vₜₕ₁, and is set to a smaller value than the brake operation speed if the brake operation speed is higher than the predetermined speed Vₜₕ₁.

A minimum value setting unit 34 compares the creep torque limit value subjected to the limitation of the maximum value of the change rate by the limiter processing unit 33, and zero to each other, and outputs one of them that has a larger value as the creep torque limit value.

A limited creep torque instruction value calculation unit 35 compares the creep torque instruction value and the creep torque limit value to each other, and outputs one of them that has a smaller value as the limited creep torque instruction value. The limited creep torque instruction value is transmitted to the motor controller 3.

A brake torque limit value calculation unit 36 calculates a brake torque limit value by subtracting the limited creep torque instruction value from the creep torque instruction.

A braking force limit value calculation unit 37 outputs the braking force limit value by multiplying the brake torque limit value by an Nm-to-N conversion constant, according to which the torque is converted into the braking force.

A braking force limit value selection unit 38 outputs zero as the braking force limit value if the sudden pressing determination flag is turned on, and outputs the braking force limit value calculated by the braking force limit value calculation unit 37 if the sudden pressing determination flag is turned off. The braking force limit value is transmitted to the brake controller 16.

Next, functions will be described.

### [Function of Reducing Creep Force according to Brake Operation Amount]

The limit value calculation unit 23 reduces the limited creep torque instruction value as the brake operation amount is increased, if the brake pedal is pressed during the creep control. A larger brake operation amount indicates that the driver's intention to stop the vehicle is stronger, whereby the creep force is unnecessary. Therefore, wasteful energy consumption can be prevented or cut down by reducing the creep force as the brake operation force is increased. At this time, if the brake operation amount is large (if the brake operation amount is equal to or larger than the second operation amount Sₜₕ₂), the limited value calculation unit 23 reduces the limited creep torque instruction value to zero, whereby wasteful energy consumption can be maximally prevented or reduced. On the other hand, if the brake operation amount is small (if the brake operation amount is smaller than the second operation amount Sₜₕ₂), the limited value calculation unit 23 maximizes the limited creep torque instruction value and does not reduce the limited creep torque instruction value to zero. A small brake operation amount indicates that the driver's intention to stop the vehicle is weak, whereby the driver highly likely accelerates the vehicle again soon. Further, when the brake operation amount is reduced while the vehicle is stopped, the driver highly likely starts the vehicle again. Therefore, in this case, keeping the motor 1 in operation can prevent or reduce a delay of a rise of the driving force when the driver presses the accelerator at the time of the restart or the reacceleration of the vehicle.

### [Function of Reducing Braking Force according to Amount of Reduction in Creep Force]

The limit value calculation unit 23 increases the braking force limit value as the limited creep torque instruction value is reduced. Therefore, the limited braking force instruction value acquired by subtracting the braking force limit value from the braking force instruction value is set to a smaller value as the limited creep torque instruction value is reduced. As described above, reducing the creep force as the brake operation amount is increased results in that an actual deceleration exceeds a deceleration expected by the driver. When the creep force is generated during the brake operation, the actually acquired deceleration falls below the deceleration corresponding to the driver's brake operation amount input by the driver. Then, normally, the driver performs the brake operation assuming that the deceleration is reduced due to the generation of the creep force, although unconsciously. On the other hand, when the creep force is controlled as described above and the brake operation amount is large, this results in acquisition of a larger deceleration than the deceleration expected by the driver, making the driver uncomfortable due to inconsistency between the brake operation amount and the deceleration. Therefore, reducing the braking force as the creep force is limited by a larger amount (a first state) can prevent or weaken the influence on the deceleration due to the limitation of the creep force, succeeding in alleviating the discomfort imposed on the driver.

### [Function of Setting Gradient of Reduction in Creep Force according to Brake Operation Speed]

The limit value calculation unit 23 sets the rate limit value to a higher value as the brake operation speed is increased. In other words, the present embodiment can change the deceleration according to the driver's intention to decelerate the vehicle, by increasing a gradient of the reduction in the creep force as the brake operation speed is increased and thereby allowing the deceleration to rise more quickly as the brake operation speed is increased. Especially, if the brake operation speed is low (if the brake operation speed is equal to or lower than the predetermined speed Vₜₕ₁), the rate limit value is set so as to match the brake operation speed. In other words, the brake operation speed and a speed at which the creep force is reduced are in synchronization with each other, which can alleviate a discomfort due to inconsistency between the brake operation speed and the speed at which the deceleration changes. On the other hand, if the brake operation speed is high (if the brake operation speed is higher than the predetermined speed Vₜₕ₁), the rate limit value is set so as to fall below the brake operation speed.

Reducing the torque of the motor 1 according to the sudden brake operation may cause a vibration at a driving system (the speed reducer 6, the gear of the differential gear 7, and the like) of a vehicle body that is derived from resonance of the driving system. The vibration of the driving system leads to generation of a shock and an abnormal noise. Therefore, when the brake operation speed is high, the creep force is controlled so as to be reduced at a lower speed than the brake operation speed, which can prevent or reduce the vibration of the driving system when the brake operation speed is high.

### [Function of Setting Creep Force according to Gradient of Road Surface]

The limit value calculation unit 23 corrects the creep torque limit value set according to the brake operation amount into a larger value as the gradient of the road surface is increased, when the road surface has the ascending gradient. In the case of an uphill road, a force of moving the vehicle backward is enhanced as the gradient of the road surface is increased. Therefore, reducing the creep force according to the brake operation amount on the uphill road may result in generation of an excessive deceleration. Further, when the vehicle is started from the stopped state on the uphill road, a large rollback (a downward slide of the vehicle) may occur when the driver transfers his/her pressing foot from the brake pedal to the accelerator pedal. Therefore, the reduction in the creep force according to the brake operation amount is cut down as the gradient of the road surface is increased on the uphill road, which can prevent or reduce the generation of the excessive deceleration on the uphill road, and prevent or reduce the rollback when the vehicle is started.

The road surface gradient detection unit 31 detects that the road surface has the gradient if there is a difference between the predicted vehicle speed predicted by the vehicle speed prediction unit 31a and the calculated vehicle speed calculated by the brake controller 16. As a result, presence or absence of the gradient of the road surface can be easily detected. Further, because the deviation between the predicted vehicle speed and the calculated vehicle speed is increased as the gradient of the road surface is increased, a degree of the gradient can also be accurately estimated.

### [Function of Avoiding Reduction in Braking Force when Vehicle is Braked Suddenly]

The limit value calculation unit 23 sets the braking force limit value to zero while limiting the creep torque instruction value with use of the creep torque limit value if the sudden pressing determination flag is turned on. Therefore, if the sudden pressing determination flag is turned on, the braking force instruction value calculated by the brake controller 16 is not subject to the limitation by the braking force limit value (= 0). When the driver brakes the vehicle suddenly (presses the brake pedal suddenly) for the purpose of, for example, avoiding an obstacle during the creep control, reducing the creep force and the braking force as the brake operation amount is increased results in that the braking force is limited as the brake operation amount is increased, thereby leading to an extension of a braking distance. Therefore, in the first embodiment, the sudden braking state is detected from the brake operation state. Then, when the sudden braking state is detected, the braking force is not reduced but is generated according to the brake operation amount while the creep force is reduced according to the brake operation amount similarly to the state that is not the sudden braking state (a second state). This operation can avoid the limitation of the braking force and generate the deceleration as requested by the driver, thereby preventing or reducing the extension of the braking distance, when the vehicle is braked suddenly.

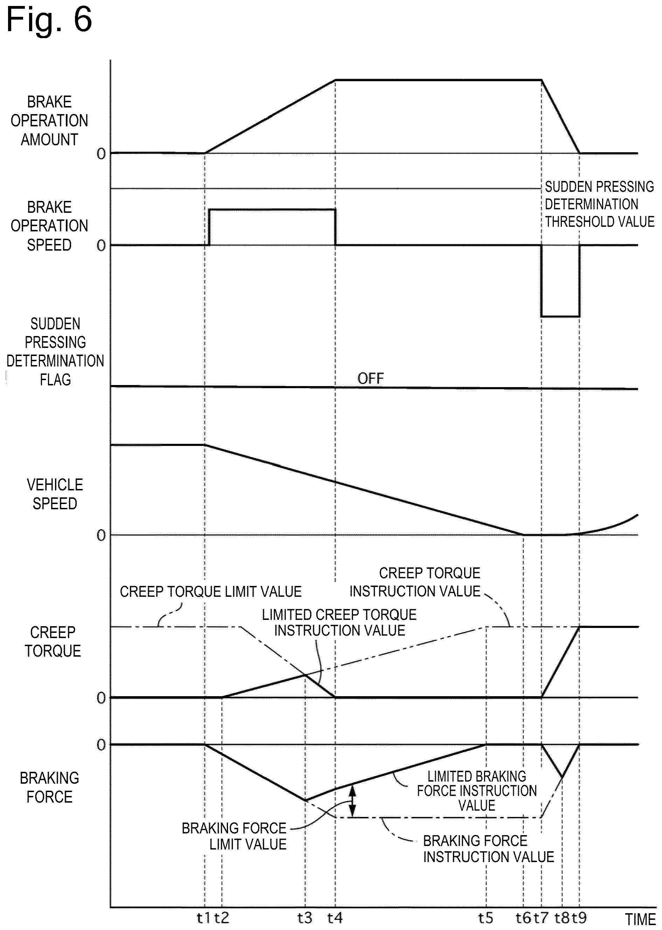

Fig. 6 is a timing chart illustrating an operation of the creep control according to the first embodiment at normal times (when the brake pedal is not pressed suddenly).

At time t1, the driver starts pressing the brake pedal, so that the vehicle speed starts slowing down. Because the brake operation speed is lower than the sudden pressing determination threshold value, the sudden pressing determination flag is kept in the OFF state after that.

At time t2, the number of rotations of the motor is reduced to the second number of rotations Nₜₕ₂, so that the creep control starts, and the creep torque instruction value rises in a section from time t2 to time t3. The creep torque limit value is also calculated according to the brake operation amount, but the creep torque instruction value is smaller than the creep torque limit value, so that the creep torque instruction value is output as the limited creep torque instruction value and the limited creep torque instruction value is increased. Further, because the difference between the creep torque instruction value and the limited creep torque instruction value, i.e., the braking force limit value is zero, the limited braking force instruction value matches the braking force instruction value according to the brake operation amount.

At time t3, the creep torque limit value matches the creep torque instruction value, so that the creep torque limit value is output as the limited creep torque instruction value, and the limited creep torque instruction value is reduced in a section from time t3 to time t4. The limited braking force instruction value is limited to a value acquired by subtracting the braking force limit value from the braking force instruction value.

At time t4, the brake operation amount reaches the second operation amount Sₜₕ₂, so that the limited creep torque instruction value becomes zero. At the same time, in a section from time t4 to time t5, the braking force instruction value is constant because the driver stops pressing the brake pedal, but the creep torque instruction value is increased according to the slowdown of the vehicle speed, so that the braking force limit value is increased and the limited braking force instruction value is gradually reduced.

At time t5, the number of rotations of the motor is reduced to the first number of rotations Nₜₕ₁, so that the creep torque instruction value is maximized. At time t6, the vehicle is stopped. In a section from time t5 to time t7, the braking force limit value is constant, so that the limited braking force instruction value is kept constant.

At time 7, the driver starts releasing the pressed brake pedal, so that the limited creep torque instruction value is increased in a section from time t7 to time t8. The braking force limit value is reduced, so that the limited braking force instruction value is increased.

At time t8, the braking force instruction value matches the limited braking force instruction value, so that the braking force instruction value serves as the limited braking force instruction value and the limited braking force instruction value is reduced in a section from time t8 to time t9.

At time t9, the brake operation amount becomes zero, so that the limited braking force instruction value becomes zero while the limited creep torque instruction value is maximized, whereby the vehicle starts moving forward due to the creep force applied to the vehicle.

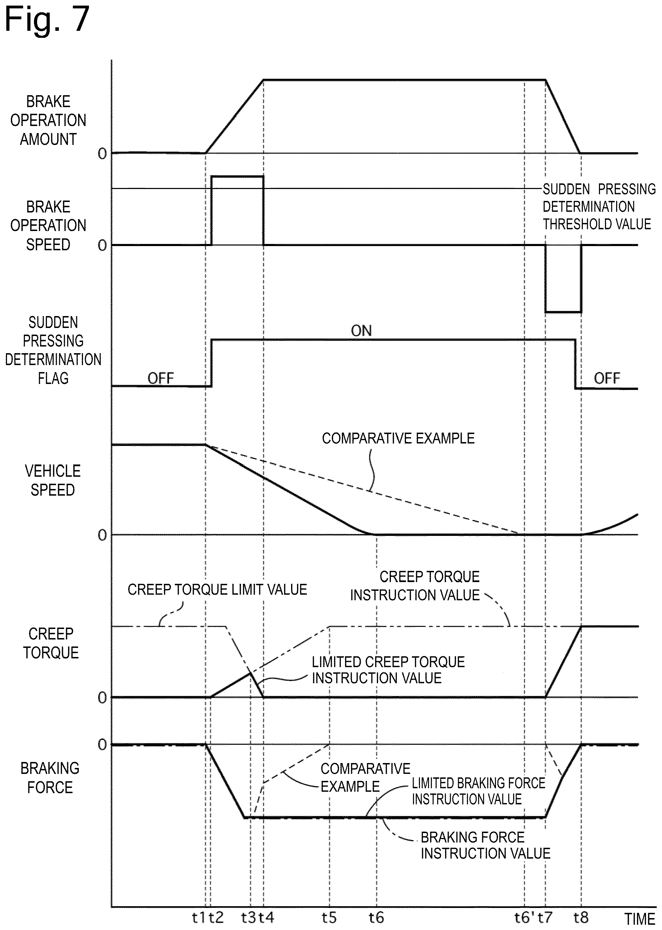

Fig. 7 is a timing chart illustrating an operation of the creep control according to the first embodiment when the vehicle is pressed suddenly.

At time t1, the driver starts pressing the brake pedal, so that the vehicle speed starts slowing down. Because the brake operation speed exceeds the sudden pressing determination threshold value, the sudden pressing determination flag is turned on.

At time t2, the number of rotations of the motor is reduced to the second number of rotations Nₜₕ₂, so that the creep control starts and the creep torque instruction value rises in the section from time t2 to time 3. The creep torque limit value is also calculated according to the brake operation amount, but the creep torque instruction value is smaller than the creep torque limit value, so that the creep torque instruction value is output as the limited creep torque instruction value and the limited creep torque instruction value is increased. Further, because the difference between the creep torque instruction value and the limited creep torque instruction value, i.e., the braking force limit value is zero, the limited braking force instruction value matches the braking force instruction value according to the brake operation amount.

At time t3, the creep torque limit value matches the creep torque instruction value, so that the creep torque limit value is output as the limited creep torque instruction value and the limited creep torque instruction value is reduced in the section from time t3 to time t4. The sudden pressing determination flag is in the ON state and the braking force limit value remains zero, so that the limited braking force instruction value matches the braking force instruction value.

At time t4, the brake operation amount reaches the second operation amount Sₜₕ₂, so that the limited creep torque instruction value becomes zero. At the same time, the driver stops pressing the brake pedal, so that the limited braking force instruction value is kept constant in the section from time t4 to time t5.

At time t5, the number of rotations of the motor is reduced to the first number of rotations Nₜₕ₁, so that the creep torque instruction value is maximized. At time t6, the vehicle is stopped. The limited braking force instruction value in the section from time t5 to time t7 is the same as that in the section from time t4 to time t5.

At time t7, the driver starts releasing the pressed brake pedal, so that the limited creep torque instruction value is increased in the section from time t7 to time t8. The limited braking force instruction value is reduced according to the reduction in the brake operation amount.

At time t8, the brake operation amount becomes zero, so that the limited braking force instruction value becomes zero while the limited creep torque instruction value is maximized, whereby the vehicle starts moving forward due to the creep force applied to the vehicle.

In Fig. 7, broken lines at the vehicle speed and the braking force indicate an operation that reduces the braking force even when the vehicle is braked suddenly in a similar manner to the operation at normal times, as a comparative example to the first embodiment. In the case of the comparative example, the limited braking force instruction value is reduced as the braking force limit value is increased from time t3. Therefore, the limited braking force instruction value is largely limited from the braking force instruction value calculated according to the brake operation amount. Therefore, in the comparative example, the vehicle cannot acquire the deceleration requested by the driver, requiring a longer braking distance, when the vehicle is braked suddenly. On the other hand, in the creep control according to the first embodiment, the braking force limit value is set to zero when the vehicle is braked suddenly, which allows the vehicle to acquire the deceleration requested by the driver, thus preventing or reducing the extension of the braking distance. While the vehicle is stopped at time t6' in the comparative example, the vehicle is stopped at time t6 in the first embodiment, which clarifies that the braking distance is considerably shortened in the first embodiment.

Next, advantageous effects will be described.

The vehicle control apparatus according to the first embodiment brings about advantageous effects that will be listed below.
(1) The vehicle control apparatus includes the electric motor 1 configured to provide the driving force to each of the wheels 15RL and 15RR, the brake stroke sensor 17 configured to detect the driver's brake operation amount, the hydraulic braking device (the hydraulic control unit 19, the hydraulic pipe 20, and the brake calipers 21FL, 21FR, 21RL, and 21RR) configured to provide the braking force to each of the wheels 15FL, 15FR, 15RL, and 15RR according to the brake operation amount, the motor controller 3 configured to control the driving force of the electric motor 1, and the brake controller 16 configured to control the braking force of the hydraulic braking device. The motor controller 3 controls the electric motor 1 so as to reduce the driving force according to the brake operation amount when the driver's brake operation is detected. The brake controller 16 has the first state of reducing the braking force according to the driving force generated by the motor controller 3, and the second state of generating the braking force according to the brake operation amount if the sudden braking state is detected based on the brake operation amount detected by the brake stroke sensor 17.
   Therefore, the vehicle control apparatus can prevent or reduce the extension of the braking distance when the vehicle is braked suddenly.
(2) The motor controller 3 controls the driving force so as to generate the creep force when the driver performs the brake operation. The brake controller 16 changes the braking force so as to reduce the braking force according to the calculated creep force in the first state.
   Therefore, the vehicle control apparatus can prevent or weaken the influence on the deceleration due to the reduction in the creep force, succeeding in alleviating the discomfort imposed on the driver.
(3) The creep force is reduced by the reduction amount determined according to the driver's brake operation amount, and the reduction amount is large when the brake operation amount is large compared to when the brake operation amount is small.
   Therefore, the vehicle control apparatus can prevent or reduce the wasteful energy consumption.
(4) The creep force is reduced to zero when the brake operation amount is large.
   Therefore, the vehicle control apparatus can maximally prevent or reduce the wasteful energy consumption.
(5) The creep force is not reduced to zero when the brake operation amount is small.
   Therefore, the vehicle control apparatus can prevent or reduce the delay of the rise of the driving force when the driver presses the accelerator at the time of the restart or the reacceleration of the vehicle.
(6) The gradient of the reduction of the creep force is determined according to the driver's brake operation speed, and the gradient of the reduction is great when the brake operation speed is high compared to when the brake operation speed is low.
   Therefore, the vehicle control apparatus can change the deceleration according to the driver's intention to decelerate the vehicle.
(7) The gradient of the reduction has the magnitude corresponding to the brake operation speed when the brake operation speed is low, and is smaller than the brake operation speed when the brake operation speed is high.
   Therefore, the vehicle control apparatus can achieve both the alleviation of the discomfort due to the inconsistency between the brake operation speed and the change in the deceleration, and the prevention or the reduction in the vibration of the driving system.
(8) The vehicle control apparatus further includes the road surface gradient detection unit 31 configured to detect the gradient of the road surface where the vehicle is stopped by the driver's brake operation. The motor controller 3 increases the creep force determined according to the brake operation amount if the gradient of the road surface is the ascending gradient, when the gradient of the road surface is detected by the road surface gradient detection unit 31.
   Therefore, the vehicle control apparatus can prevent or reduce the occurrence of the excessive deceleration on the uphill road, and prevent or reduce the rollback when the vehicle is started.
(9) The vehicle control apparatus further includes the vehicle speed calculation unit 16a configured to calculate the speed of the vehicle, and the vehicle speed prediction unit 31a configured to predict the speed of the vehicle based on the braking force generated at the vehicle. The road surface gradient detection unit 31 detects that the road surface includes the gradient if there is the deviation between the predicted vehicle speed predicted by the vehicle speed prediction unit 31a and the calculated vehicle speed calculated by the vehicle speed calculation unit 16a.
   Therefore, the vehicle control apparatus can easily detect whether there is the gradient of the road surface.
(10) The vehicle control method includes, when controlling the driving force of the electric motor 1 configured to provide the driving force to each of the wheels 15RL and 15RR and the braking force of the hydraulic braking device configured to provide the braking force to each of the wheels 15FL, 15FR, 15RL, and 15RR, reducing the driving force according to the driver's brake operation amount and also adjusting the braking force according to this driving force if the driver's brake operation is detected, and generating the braking force according to the brake operation amount if the sudden braking state is detected.
Therefore, the vehicle control apparatus can prevent or reduce the extension of the braking distance when the vehicle is braked suddenly.

### [Second Embodiment]

The second embodiment is different from the first embodiment in terms of the operations of the differentiation calculation unit 25 and the sudden pressing determination unit 26 in the control block diagram of the limit value calculation unit 23 illustrated in Fig. 4.

The differentiation calculation unit 25 according to the second embodiment calculates a brake operation acceleration by calculating a second-order differential of the brake operation amount. The sudden pressing determination unit 26 compares the brake operation acceleration and a predetermined sudden pressing determination threshold value to each other. Then, the sudden pressing determination unit 26 turns on the sudden pressing determination flag indicating the sudden pressing state (the sudden braking state) if the brake operation acceleration is equal to or higher than the sudden pressing determination threshold value, and turns off the sudden pressing determination flag if the brake operation acceleration is lower than the sudden pressing determination threshold value

Other configurations are similar to the first embodiment, and therefore the illustration and the description thereof will be omitted herein.

The vehicle control apparatus according to the second embodiment brings about advantageous effects that will be listed below, in addition to the advantageous effects (3) to (10) of the first embodiment.
(11) The vehicle control apparatus includes the electric motor 1 configured to provide the driving force to each of the wheels 15RL and 15RR, the brake stroke sensor 17 configured to detect the driver's brake operation amount, the hydraulic braking device (the hydraulic control unit 19, the hydraulic pipe 20, and the brake calipers 21FL, 21FR, 21RL, and 21RR) configured to provide the braking force to each of the wheels 15FL, 15FR, 15RL, and 15RR according to the brake operation amount, the creep torque instruction value calculation unit 22 configured to calculate the creep torque instruction value when the accelerator operation amount is zero, the motor controller 3 configured to control the driving force of the electric motor 1 so as to generate the braking force according to the creep torque instruction value, the limit value calculation unit 23 configured to limit the creep torque instruction value according to the brake operation amount, and the brake controller 16 configured to cause the hydraulic braking device to generate the braking force instruction value calculated according to the brake operation amount. The brake controller 16 has the first state of generating the hydraulic braking force according to the limited braking force instruction value acquired by subtracting the difference between the creep torque instruction value and the creep torque limit value calculated by the limit value calculation unit 23 from the braking force instruction value, and the second state of generating the braking force according to the brake operation amount when the second-order differential value of the brake operation amount detected by the brake stroke sensor 17 (the brake operation acceleration) reaches or exceeds the predetermined sudden pressing determination threshold value.
   Therefore, the vehicle control apparatus can prevent or reduce the extension of the braking distance when the vehicle is braked suddenly.
(12) In the first state, the motor controller 3 controls the driving force so as to generate the creep force when the driver performs the brake operation, and also reduces the creep force according to the brake operation amount. The brake controller 16 calculates the magnitude of the reduced creep force based on the brake operation amount, and changes the braking force so as to reduce the braking force according to the calculated creep force.

Therefore, the vehicle control apparatus can prevent or weaken the influence on the deceleration due to the reduction in the creep force, succeeding in alleviating the discomfort imposed on the driver.

### [Other Embodiments]

Having described embodiments for embodying the present invention based on examples thereof, the specific configuration of the present invention is not limited to the configuration described in the exemplary embodiments, and the present invention also includes a design modification and the like thereof made within a range that does not depart from the spirit of the present invention.

For example, in the embodiments, the brake operation amount is used as the driver's brake operation state, but the driver's brake operation force may be used as the brake operation state.

Further, in the embodiments, the correction of the creep torque limit value has been described referring to the example in which the creep torque limit value is corrected both when the vehicle is running on the ascending gradient and when the vehicle is running on the descending gradient, but the vehicle control apparatus may be configured to correct the creep torque limit value only when the vehicle is running on the ascending gradient.

In the second embodiment, the brake operation acceleration is acquired by calculating the second-order differential of the brake operation amount, but the vehicle control apparatus may be equipped with a sensor that detects the brake operation acceleration. When the driver presses the brake pedal, the brake operation acceleration rises more quickly than the brake operation amount, whereby directly detecting the brake operation acceleration can achieve an advantage of being able to determine the sudden pressing state at an early timing compared to calculating the second-order differential of the brake operation amount.

According to the above-described embodiments, the extension of the braking distance when the vehicle is braked suddenly can be prevented or reduced.

At least the following technical ideas can be recognized from the above-described embodiments. In the following description, the technical ideas will be described.
(a) A vehicle control apparatus includes an electric motor configured to provide a driving force to a wheel, a brake operation state detection unit configured to detect a driver's brake operation state, a hydraulic braking device configured to provide a braking force to the wheel according to the brake operation state or a state of a vehicle, a motor control unit configured to control the driving force of the electric motor, and a hydraulic braking control unit configured to control the braking force of the hydraulic braking device. The motor control unit controls the electric motor so as to reduce the driving force according to the brake operation state when a driver's brake operation is detected. The hydraulic braking control unit has a first state of reducing the braking force according to the driving force generated by the motor control unit, and a second state of generating the braking force according to the brake operation state if a sudden braking state is detected by the brake operation state detection unit.
(b) In the vehicle control apparatus according to (a), the motor control unit controls the driving force so as to generate a creep force when the driver performs the brake operation. The hydraulic braking control unit changes the braking force so as to reduce the braking force according to the calculated creep force in the first state.
(c) In the vehicle control apparatus according to (b), the creep force is reduced by a reduction amount determined according to a driver's brake operation amount, and the reduction amount is large when the brake operation amount is large compared to when the brake operation amount is small.
(d) In the vehicle control apparatus according to (c), the creep force is reduced to zero when the brake operation amount is equal to or larger than a predetermined operation amount.
(e) In the vehicle control apparatus according to (c), the creep force is not reduced to zero when the brake operation amount is smaller than a predetermined operation amount.
(f) In the vehicle control apparatus according to any of (b) to (e), a gradient of the reduction when the creep force is reduced is determined so as to be reduced according to a driver's brake operation speed, and the gradient of the reduction is great when the brake operation speed is high compared to when the brake operation speed is low.
(g) In the vehicle control apparatus according to (f), the gradient of the reduction has a magnitude corresponding to the brake operation speed when the brake operation speed is equal to or lower than a predetermined speed, and is smaller than the brake operation speed when the brake operation speed is higher than the predetermined speed.
(h) The vehicle control apparatus according to any of (b) to (g) further includes a road surface gradient detection unit configured to detect a gradient of a road surface where the vehicle is stopped by the driver's brake operation. The motor control unit increases the creep force determined according to the brake operation amount if the gradient of the road surface is an ascending gradient, when the gradient of the road surface is detected by the road surface gradient detection unit.
(i) The vehicle control apparatus according to (h) further includes a vehicle speed calculation unit configured to calculate a speed of the vehicle, and a vehicle speed prediction unit configured to predict the speed of the vehicle based on the braking force generated at the vehicle. The road surface gradient detection unit detects that the road surface includes the gradient if there is a deviation between the predicted vehicle speed predicted by the vehicle speed prediction unit and the calculated vehicle speed calculated by the vehicle speed calculation unit.
(j) A vehicle control apparatus includes an electric motor configured to provide a driving force to a wheel, a brake operation state detection unit configured to detect a driver's brake operation state, a hydraulic braking device configured to provide a braking force to the wheel according to the brake operation state or a state of a vehicle, a driver request driving force calculation unit configured to calculate a driver request driving force based on a driver's accelerator operation, a motor control unit configured to control the driving force of the electric motor so as to generate the driver request driving force, a driver request driving force limit unit configured to limit the driver request driving force to a limit value according to the brake operation state, and a hydraulic braking control unit configured to cause the hydraulic braking device to generate the braking force calculated according to the brake operation state. The hydraulic braking control unit has a first state of generating a hydraulic braking force by subtracting a force corresponding to a difference between the driver request driving force and the limit value calculated by the driver request driving force limit unit from the calculated braking force, and a second state of generating the braking force according to the brake operation state when a predetermined operation acceleration is detected by the brake operation state detection unit.
(k) In the vehicle control apparatus according to (j), in the first state, the motor control unit controls the driving force so as to generate a creep force when the driver performs a brake operation, and also reduces the creep force according to the brake operation state. The hydraulic braking control unit calculates a magnitude of the reduced creep force based on the brake operation state, and changes the braking force so as to reduce the braking force according to the calculated creep force.
(l) In the vehicle control apparatus according to (k), the creep force is reduced by a reduction amount determined according to a driver's brake operation amount, and the reduction amount is large when the brake operation amount is large compared to when the brake operation amount is small.
   Therefore, the vehicle control apparatus can prevent or reduce wasteful energy consumption.
(m) In the vehicle control apparatus according to (1), the creep force is reduced to zero when the brake operation amount is equal to or larger than a predetermined operation amount.
   Therefore, the vehicle control apparatus can maximally prevent or reduce the wasteful energy consumption.
(n) In the vehicle control apparatus according to (m), the creep force is not reduced to zero when the brake operation amount is smaller than the predetermined operation amount.
   Therefore, the vehicle control apparatus can prevent or reduce a delay of a rise of the driving force when the driver presses an accelerator at the time of a restart or a reacceleration of the vehicle.
(o) In the vehicle control apparatus according to any of (k) to (n), a gradient of the reduction of the creep force is determined so as to be reduced according to a driver's brake operation speed, and the gradient of the reduction is great when the brake operation speed is high compared to when the brake operation speed is low.
   Therefore, the vehicle control apparatus can change a deceleration according to a driver's intention to decelerate the vehicle.
(p) In the vehicle control apparatus according to (o), the gradient of the reduction has a magnitude corresponding to the brake operation speed when the brake operation speed is equal to or lower than a predetermined speed, and is smaller than the brake operation speed when the brake operation speed is higher than the predetermined speed.
   Therefore, the vehicle control apparatus can achieve both alleviation of a discomfort due to inconsistency between the brake operation speed and the change in the deceleration, and prevention or reduction in a vibration of a driving system.
(q) The vehicle control apparatus according to any of (k) to (p) further includes a road surface gradient detection unit configured to detect a gradient of a road surface where the vehicle is stopped by the driver's brake operation. The motor control unit increases the creep force determined according to the brake operation amount if the gradient of the road surface is an ascending gradient, when the gradient of the road surface is detected by the road surface gradient detection unit.
   Therefore, the vehicle control apparatus can prevent or reduce occurrence of an excessive deceleration on an uphill road, and prevent or reduce a rollback when the vehicle is started.
(r) The vehicle control apparatus according to (q) further includes a vehicle speed calculation unit configured to calculate a speed of the vehicle, and a vehicle speed prediction unit configured to predict the speed of the vehicle based on the braking force generated at the vehicle. The road surface gradient detection unit detects that the road surface includes the gradient if there is a deviation between the predicted vehicle speed predicted by the vehicle speed prediction unit and the calculated vehicle speed calculated by the vehicle speed calculation unit.
   Therefore, the vehicle control apparatus can easily detect whether there is the gradient of the road surface.
(s) A vehicle control method includes, when controlling a driving force of an electric motor configured to provide a driving force to a wheel and a braking force of a hydraulic braking device configured to provide a braking force to the wheel, reducing the driving force according to a driver's brake operation state and also adjusting the braking force according to this driving force if a driver's brake operation is detected, and generating the braking force according to the brake operation state if a sudden braking state is detected.

Having described merely several embodiments of the present invention, it is apparent to those skilled in the art that the embodiments described as examples can be modified or improved in various manners without substantially departing from the novel teachings and advantages of the present invention. Therefore, such embodiments modified or improved in various manners are intended to be also contained in the technical scope of the present invention.

Having described embodiments of the present invention based on several examples, the above-described embodiments of the present invention are intended to only facilitate the understanding of the present invention, and are not intended to limit the present invention thereto. Needless to say, the present invention can be modified or improved without departing from the spirit of the present invention, and includes equivalents thereof. Further, the individual components described in the claims and the specification can be arbitrarily combined or omitted within a range that allows them to remain capable of achieving at least a part of the above-described objects or producing at least a part of the above-described advantageous effects.

This application claims priority to Japanese Patent Application No. 2014-143413 filed on July 11, 2014. The entire disclosure of Japanese Patent Application No. 2014-143413 filed on July 11, 2014 including the specification, the claims, the drawings, and the summary is incorporated herein by reference in its entirety.

The entire disclosure of Japanese Patent Application Public Disclosure No. 2000-69604 (PTL 1) including the specification, the claims, the drawings, and the summary is incorporated herein by reference in its entirety.

### REFERENCE SIGNS LIST

1 electric motor
3 motor controller (motor control unit)
16 brake controller (hydraulic braking control unit)
16a vehicle speed calculation unit
17 brake stroke sensor (brake operation state detection unit)
19 hydraulic control unit (hydraulic braking device)
20 hydraulic pipe (hydraulic braking device)
21FL, 21FR, 21RL, and 21RR brake caliper (hydraulic braking device)
22 creep torque instruction value calculation unit (driver request driving force calculation unit)
23 limit value calculation unit (driver request driving force limit unit)
31 road surface gradient detection unit
31a vehicle speed prediction unit

## Claims

1. A vehicle control apparatus comprising:
an electric motor configured to provide a driving force to a wheel;
a brake operation state detection unit configured to detect a driver's brake operation state;
a hydraulic braking device configured to provide a braking force to the wheel according to the brake operation state or a state of a vehicle;
a motor control unit configured to control the driving force of the electric motor; and
a hydraulic braking control unit configured to control the braking force of the hydraulic braking device,
wherein the motor control unit controls the electric motor so as to reduce the driving force according to the brake operation state when a driver's brake operation is detected, and
wherein the hydraulic braking control unit has a first state of reducing the braking force according to the driving force generated by the motor control unit, and a second state of generating the braking force according to the brake operation state if a sudden braking state is detected by the brake operation state detection unit.

2. The vehicle control apparatus according to claim 1, wherein the motor control unit controls the driving force so as to generate a creep force when the driver performs the brake operation, and
wherein the hydraulic braking control unit changes the braking force so as to reduce the braking force according to the calculated creep force in the first state.

3. The vehicle control apparatus according to claim 2, wherein the creep force is reduced by a reduction amount determined according to a driver's brake operation amount, and the reduction amount is large when the brake operation amount is large compared to when the brake operation amount is small.

4. The vehicle control apparatus according to claim 3, wherein the creep force is reduced to zero when the brake operation amount is equal to or larger than a predetermined operation amount.

5. The vehicle control apparatus according to claim 3, wherein the creep force is not reduced to zero when the brake operation amount is smaller than a predetermined operation amount.

6. The vehicle control apparatus according to claim 2, wherein a gradient of a reduction when the creep force is reduced is determined so as to be reduced according to a driver's brake operation speed, and the gradient of the reduction is great when the brake operation speed is high compared to when the brake operation speed is low.

7. The vehicle control apparatus according to claim 6, wherein the gradient of the reduction has a magnitude corresponding to the brake operation speed when the brake operation speed is equal to or lower than a predetermined speed, and is smaller than the brake operation speed when the brake operation speed is higher than the predetermined speed.

8. The vehicle control apparatus according to claim 2, further comprising a road surface gradient detection unit configured to detect a gradient of a road surface where the vehicle is stopped by the driver's brake operation,
wherein the motor control unit increases the creep force determined according to the brake operation amount if the gradient of the road surface is an ascending gradient, when the gradient of the road surface is detected by the road surface gradient detection unit.

9. The vehicle control apparatus according to claim 8, further comprising:
a vehicle speed calculation unit configured to calculate a speed of the vehicle; and
a vehicle speed prediction unit configured to predict the speed of the vehicle based on the braking force generated at the vehicle,
wherein the road surface gradient detection unit detects that the road surface includes the gradient if there is a deviation between the predicted vehicle speed predicted by the vehicle speed prediction unit and the calculated vehicle speed calculated by the vehicle speed calculation unit.

10. A vehicle control apparatus comprising:
an electric motor configured to provide a driving force to a wheel;
a brake operation state detection unit configured to detect a driver's brake operation state;
a hydraulic braking device configured to provide a braking force to the wheel according to the brake operation state or a state of a vehicle;
a driver request driving force calculation unit configured to calculate a driver request driving force based on a driver's accelerator operation;
a motor control unit configured to control the driving force of the electric motor so as to generate the driver request driving force;
a driver request driving force limit unit configured to limit the driver request driving force to a limit value according to the brake operation state; and
a hydraulic braking control unit configured to cause the hydraulic braking device to generate the braking force calculated according to the brake operation state,
wherein the hydraulic braking control unit has a first state of generating a hydraulic braking force by subtracting a force corresponding to a difference between the driver request driving force and the limit value calculated by the driver request driving force limit unit from the calculated braking force, and a second state of generating the braking force according to the brake operation state when a predetermined operation acceleration is detected by the brake operation state detection unit.

11. The vehicle control apparatus according to claim 10, wherein, in the first state, the motor control unit controls the driving force so as to generate a creep force when the driver performs a brake operation, and also reduces the creep force according to the brake operation state, and
wherein the hydraulic braking control unit calculates a magnitude of the reduced creep force based on the brake operation state, and changes the braking force so as to reduce the braking force according to the calculated creep force.

12. The vehicle control apparatus according to claim 11, wherein the creep force is reduced by a reduction amount determined according to a driver's brake operation amount, and the reduction amount is large when the brake operation amount is large compared to when the brake operation amount is small.

13. The vehicle control apparatus according to claim 12, wherein the creep force is reduced to zero when the brake operation amount is equal to or larger than a predetermined operation amount.

14. The vehicle control apparatus according to claim 13, wherein the creep force is not reduced to zero when the brake operation amount is smaller than the predetermined operation amount.

15. The vehicle control apparatus according to claim 11, wherein a gradient of the reduction of the creep force is determined so as to be reduced according to a driver's brake operation speed, and the gradient of the reduction is great when the brake operation speed is high compared to when the brake operation speed is low.

16. The vehicle control apparatus according to claim 15, wherein the gradient of the reduction has a magnitude corresponding to the brake operation speed when the brake operation speed is equal to or lower than a predetermined speed, and is smaller than the brake operation speed when the brake operation speed is higher than the predetermined speed.

17. The vehicle control apparatus according to claim 11, further comprising a road surface gradient detection unit configured to detect a gradient of a road surface where the vehicle is stopped by the driver's brake operation,
wherein the motor control unit increases the creep force determined according to the brake operation amount if the gradient of the road surface is an ascending gradient, when the gradient of the road surface is detected by the road surface gradient detection unit.

18. The vehicle control apparatus according to claim 17, further comprising:
a vehicle speed calculation unit configured to calculate a speed of the vehicle; and
a vehicle speed prediction unit configured to predict the speed of the vehicle based on the braking force generated at the vehicle,
wherein the road surface gradient detection unit detects that the road surface includes the gradient if there is a deviation between the predicted vehicle speed predicted by the vehicle speed prediction unit and the calculated vehicle speed calculated by the vehicle speed calculation unit.

19. A vehicle control method comprising:
when controlling a driving force of an electric motor configured to provide a driving force to a wheel and a braking force of a hydraulic braking device configured to provide a braking force to the wheel, reducing the driving force according to a driver's brake operation state and also adjusting the braking force according to this driving force if a driver's brake operation is detected; and
generating the braking force according to the brake operation state if a sudden braking state is detected.
